# EUROPEAN PATENT APPLICATION

(11) **EP 4 530 799 A1**
(43) Date of publication of application: **02.04.2025**
(21) Application number: 23909779.3
(22) Date of filing: 21.11.2023
(51) Int. Cl.: G06F 3/01, G06T 7/80, G06V 40/16, G06V 10/764

(54) **IMAGE SYNTHESIS PARAMETER DETERMINATION METHOD AND APPARATUS, AND IMAGE SYNTHESIS METHOD AND APPARATUS**

(30) Priority: 27.12.2022 CN 202211687713
(71) Applicant: Beijing Zitiao Network Technology Co., Ltd., Beijing 100190 (CN)
(72) Inventor: LONG, Xiang, Beijing 100028 (CN); REN, Yurui, Beijing 100028 (CN)
(74) Representative: Williams, Michael David
(86) International application number: PCT/CN2023/132907
(87) International publication number: WO 2024/139847

(57) **Abstract**

An image synthesis parameter determination method and apparatus, and an image synthesis method and apparatus. The image synthesis parameter determination method comprises: with the assistance of a virtual light source (202), using a virtual image acquisition device (301) to acquire a brightness parameter of a virtual facial model (201); and on the basis of a change in the brightness parameter of the virtual facial model (201) before and after the virtual facial model (201) wears glasses (203), determining a brightness attenuation parameter corresponding to the glasses (203).

## Description

### CROSS-REFERENCE TO RELATED APPLICATIONS

The present application claims priority to and is based on a Chinese application with an application number 202211687713.0 and a filing date of December 27, 2022, the aforementioned application is hereby incorporated by reference in its entirety.

### FIELD OF THE INVENTION

The present disclosure relates to the field of computer technology, in particular to an image synthesis parameter determination method and apparatus, an image synthesis method and apparatuses.

### BACKGROUND

In the related art, facial image generation technology has become mature, but most of the existing techniques are used to perform face generation for a full-face image that is shot in a long-distance shooting mode. In this case, the areas of eyes occupy a small part of the area of entire image, therefore, the imaging influence caused by glasses is small, and there is no need to perform excessive processing on the images of eyes.

At present, with more and more popular application of VR equipment in real life, cameras for shooting the eye area have been added inside the VR equipment, and are used to capture detailed movements of the eyes.

### DISCLOSURE OF THE INVENTION

According to an aspect of the present disclosure, there is provided a method of determining an image synthesis parameter, including:
acquiring a brightness parameter of a virtual face model by using a virtual image acquisition device with the assistance of a virtual light source;
determining a brightness attenuation parameter corresponding to glasses based on a change of the brightness parameter of the virtual face model before and after wearing the glasses.

According to another aspect of the present disclosure, there is provided an image synthesis method, including:
acquiring a naked-eye image, determining a glasses wearing parameter, a non-glasses area and a glasses light-transmitting area of a glasses image corresponding to the naked-eye image;
modifying the brightness of the glasses light-transmitting area and the brightness of the non-glasses area based on a brightness attenuation parameter corresponding to the glasses to obtain a modified naked-eye image;
obtaining a glasses wearing image based on the glasses wearing parameter and the modified naked-eye image, wherein a brightness attenuation coefficient represents a change of a brightness parameter of the virtual face model before and after wearing the glasses, which is acquired by using a virtual image acquisition device with the assistance of a virtual light source.

According to another aspect of the present disclosure, there is provided an apparatus for determining an image synthesis parameter, including:
an acquisition module, configured to acquire a brightness parameter of a virtual face model by using a virtual image acquisition device with the assistance of a virtual light source;
a determination module, configured to determine a brightness attenuation parameter corresponding to glasses based on change of the brightness parameter of the virtual face model before and after wearing the glasses.

According to another aspect of the present disclosure, there is provided an image synthesis apparatus including:
a determination module, configured to acquire a naked-eye image, determine a glasses wearing parameter, a non-glasses area and a glasses light-transmitting area of a glasses image corresponding to the naked-eye image;
a modification module, configured to modify the brightness of the glasses light-transmitting area and the brightness of the non-glasses area based on a brightness attenuation parameter corresponding to the glasses to obtain a modified naked-eye image;
a rendering module, configured to obtain a glasses wearing image based on the glasses wearing parameter and the modified naked-eye image, wherein a brightness attenuation coefficient represents a change of a brightness parameter of the virtual face model before and after wearing the glasses, which is acquired by using a virtual image acquisition device with the assistance of a virtual light source.

According to another aspect of the present disclosure, there is provided an electronic device including:
a processor; and,
a storage device for storing a program;
wherein the program comprises instructions which, when executed by the processor, cause the processor to perform the method according to exemplary embodiments of the present disclosure.

According to another aspect of the present disclosure, there is provided a non-transitory computer-readable storage medium storing computer instructions, wherein the computer instructions are used to cause a computer to perform the method according to exemplary embodiments of the present disclosure.

According to another aspect of the present disclosure, there is provided a computer program product, including computer programs and/or instructions, which, when running on a computer, cause the computer to perform the method according to exemplary embodiments of the present disclosure.

According to another aspect of the present disclosure, there is provided a computer program, which includes program codes that, when executed by a processor, perform the method according to exemplary embodiments of the present disclosure.

### DESCRIPTION OF THE DRAWINGS

Further details, features and advantages of the present disclosure are disclosed in the following description of exemplary embodiments taken in conjunction with the accompanying drawings, in which:
Fig. 1 shows a flowchart of an image synthesis parameter determination method of an exemplary embodiment of the present disclosure;
Fig. 2A shows a light schematic diagram before a virtual face model of an exemplary embodiment of the present disclosure wearing glasses;
Fig. 2B shows a light schematic diagram after a virtual face model of an exemplary embodiment of the present disclosure wearing glasses;
Fig. 3A shows a schematic diagram of the acquisition principle architecture of a first imaging brightness parameter before the glasses are worn;
Fig. 3B shows a schematic diagram of the acquisition principle architecture of a first imaging brightness parameter after the glasses are worn;
Fig. 4A shows a schematic diagram of the acquisition principle architecture of a second imaging brightness parameter before the glasses are worn;
Fig. 4B shows a schematic diagram of the acquisition principle architecture of a second imaging brightness parameter after the glasses are worn;
Fig. 5 shows a flowchart of an image synthesis method of an exemplary embodiment of the present disclosure;
Fig. 6A shows a schematic view of a display interface before image synthesis of an exemplary embodiment of the present disclosure;
Fig. 6B shows a schematic view of a display interface after image synthesis of an exemplary embodiment of the present disclosure;
Fig. 7 shows a modular schematic block diagram of an image synthesis parameter determination apparatus of an exemplary embodiment of the present disclosure;
Fig. 8 shows a modular schematic block diagram of an image synthesis apparatus of an exemplary embodiment of the present disclosure;
Fig. 9 shows a schematic block diagram of a chip of an exemplary embodiment of the present disclosure;
Fig. 10 shows a structural block diagram of an exemplary electronic device that can be used to implement embodiments of the present disclosure.

### DETAILED DESCRIPTION OF PREFERRED EMBODIMENTS

Embodiments of the present disclosure will be described in more detail below with reference to the accompanying drawings. Although some embodiments of the present disclosure are shown in the drawings, it should be understood that the present disclosure can be embodied in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in method embodiments of the present disclosure may be performed in a different order and/or in parallel. Furthermore, the method embodiments may include additional steps and/or omit performing the illustrated steps. The scope of the present disclosure is not limited in this respect.

As used herein, the term "including" and its variants are open inclusive, that is, "including but not limited to". The term "based on" means "at least partially based on"; the term "one embodiment" means "at least one embodiment"; the term "another embodiment" means "at least one other embodiment"; the term "some embodiments" means "at least some embodiments". Related definitions of other terms will be given in the following description. It should be noted that concepts such as "first" and "second" mentioned in the present disclosure are only used to distinguish different apparatuses, modules, or units, instead of being used to limit the sequence or interdependence of functions performed by these apparatuses, modules, or units.

It should be noted that the modifiers "one" and "a plurality of" mentioned in the present disclosure are schematic and non-limiting, and those skilled in the art shall understand that, unless otherwise clearly indicated in the context, it should be understood as "one or more".

The names of messages or information exchanged between the plurality of apparatuses in embodiments of the present disclosure are for illustrative purposes only and are not intended to limit the scope of the messages or information.

Before introducing embodiments of the present disclosure, the following definitions are given to related terms involved in the embodiments of the present disclosure:
Virtual Reality (abbreviated as VR), also known as virtual reality or realm technology, is a new practical technology developed since the 20th century. Virtual reality technology encompasses computers, electronic information, and simulation technology, its basic implementation method is, based on computer technology, utilizing and integrating the latest developments in three-dimensional graphics technology, multimedia technology, simulation technology, display technology, servo technology, and other high-tech technologies, and with the help of computers and other equipment, to create a realistic virtual world with multiple sensory experiences such as three-dimensional vision sense, touch sense, and smell sense, thereby giving people in the virtual world an immersed feel. With the continuous development of social productivity and science technology, the demand for VR technology in various industries is growing, and VR technology has also made great progress and has been gradually becoming a new field of science and technology.

Three-dimensional morphable face model (abbreviated as 3DMM) is a statistical model of face shape and appearance, firstly, multiple groups of three-dimensional (3D) face data are scanned together with high precision, and are aligned, then, Principal Component Analysis (PCA) is used to get lower-dimensional subspaces from these three-dimensional shape and color data, the variability lies in combined deformation in such PCA subspaces, which can transfer the characteristics of one face to another face or generate new faces.

Optical Simulation: The optical simulation software is an advanced functional software for analysis, optimization and tolerance analysis which meets industrial standards, which can quickly and accurately complete optical imaging and lighting design, providing unparalleled performance, flexibility, speed and accuracy for optical designers, the optical simulation software can be used to simulate the analysis of optical parameters by a lighting equipment.

Fully connected layer is a classifier, which can map a high-dimensional feature map obtained by feature extraction into one-dimensional feature vector. This one-dimensional feature vector contains all feature information and can be transformed into the probability of each category in the final classification.

Back-propagation algorithm is a back-propagation movement dominated by error loss, aiming at obtaining optimal parameters of a neural network model, in the process of training neural network, the back-propagation algorithm can be used to modify parameters in an initial neural network model, which makes reconstruction error loss of the neural network model smaller and smaller. Passing the input signal forward to the output will cause error loss, and the parameters in the initial neural network model can be updated by propagating the error loss information backward, so as to make the error loss converge.

Inpainting network model refers to Image Inpainting network model, which aims to inpaint pixel features of damaged parts in incomplete images and plays a key role in many computer vision applications. Image inpainting technology based on deep learning is a hot research topic.

In the related art, most of existing techniques are used to perform face generation for a full-face image that is shot in a long-distance shooting mode, in such a shooting distance, the imaging influence caused by glasses is small, and there is no need to perform any dedicated processing. With the popularity of VR equipment, cameras for shooting the eye area have been added inside the VR equipment, and are used to capture movements of the eyes. When users wearing glasses wear VR equipment, the camera usually shoots the eye area through the glasses. Due to the short shooting distance, the optical path change (for example, the reflection and refraction on the glasses surface) caused by the glasses lens will have a great impact on the imaging effect.

In view of the above problems, exemplary embodiments of the present disclosure provide an image synthesis parameter determination method and an image synthesis method, so as to determine a brightness attenuation parameter corresponding to glasses through the image synthesis parameter determination method, so that in the image synthesis process, the naked-eye image can be modified by using the brightness attenuation parameter, thereby ensuring that the synthesized image can present a close-to-real glasses wearing effect. This method is short time-consuming, efficient and cost-saving, and can provide users with wearing effects of various styles of glasses, without needing users to actually wear the glasses, thus improving user experience.

The methods of exemplary embodiments of the present disclosure can be applied to an electronic device, which can be equipped with various image software such as image processing software and three-dimensional modeling engine, face-shaping engine such as Unreal Engine, and can also be equipped with optical simulation software for optical simulation.

The electronic device can be a device using flash memory devices, such as smart phone (such as an Android phone and an iOS phone), a wearable device, an AR (Augmented Reality) \VR (Virtual Reality) device, an ultra-mobile personal computer (UMPC), a netbook, a personal digital assistant (PDA), tablet computers, palmtop computers, and mobile internet devices (MID). The electronic device can be equipped with a camera, which can capture images of any scene, such as pure black scenes, scenes with light sources, etc., and the camera can be a monocular camera, a binocular camera, etc., and the captured images can be gray images, color images, infrared images, ultraviolet imaging images, thermograms, etc., but are not limited to this.

The execution subject of the image synthesis parameter determination methods of the exemplary embodiments of the present disclosure is an electronic device or a chip applied in the electronic device, and the methods of the exemplary embodiments of the present disclosure will be described in detail with the accompanying drawings.

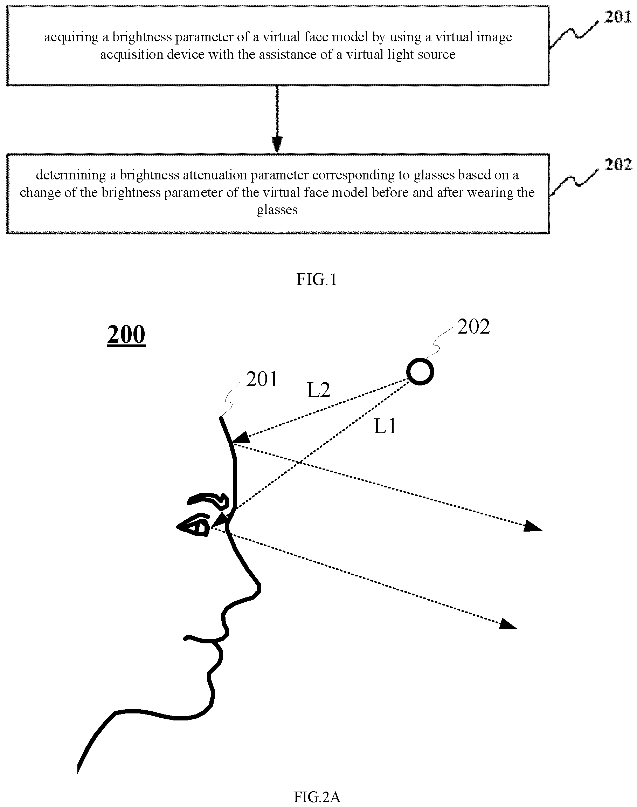

Fig. 1 shows a flowchart of an image synthesis parameter determination method of an exemplary embodiment of the present disclosure. As shown in Fig. 1, an image synthesis parameter determination method of an exemplary embodiment of the present disclosure includes:
Step 101: acquiring a brightness parameter of a virtual face model by using a virtual image acquisition device with the assistance of a virtual light source. It should be understood that the virtual image acquisition device can be a virtual camera, a virtual VR device or other possible virtual image acquisition devices, and the virtual light source can be a point light source, such as a Light Emitting Diode (abbreviated as LED) light source and an Organic Light-Emitting Diode (OLED) light source, and can also be a light source with a wide coverage area such as a line light source, a surface light source or the like.

In a practical application, in terms of an expression of the virtual face model, the virtual face model can be either a virtual face model without expression or a virtual face model with expression, the virtual face model with expression can be a virtual face model with a smile expression, a facial expression with surprise expression, or expression states in various emotions.

The above-mentioned virtual face model can a normal face model randomly generated based on a parameterized and controllable 3D face model generation system (such as a 3D deformation statistical model system for human face), and the expression can be set as a random expression such as an eye open state or an eye close state, or a facial expression can be additionally configured so that the eye state presents more emotions. Of course, a virtual character model can also be obtained from a database of a virtual engine, and the facial expression of the virtual character can be driven by setting driving parameters, so that the eyes can present required states and reflect required emotions.

Step 102: determining a brightness attenuation parameter corresponding to glasses based on a change of the brightness parameter of the virtual face model before and after wearing the glasses. Meanwhile, the image synthesis parameter may include the brightness attenuation parameter, and the virtual face model can be a virtual character face model or any other virtual animal face model, which is not limited here.

Fig. 2A shows a light schematic diagram before a virtual face model of an exemplary embodiment of the present disclosure wearing glasses. As shown in Fig. 2A, in the light schematic diagram 200 before the virtual face model wearing glasses, the light emitted by the virtual light source 202 can irradiate various parts of the virtual face model 201, for example, the first beam of light L1 irradiate the eyes, and the second beam of light L2 irradiates the forehead of the virtual face model. It can be seen that the virtual face model is essentially a naked-eye virtual face image before the glasses are worn, and none of the light irradiating the virtual face model or the light being reflected from the virtual face model would pass through the glasses, and the light path will not change. Therefore, the brightness parameter of the virtual face model obtained before the glasses are worn is not interfered by the glasses.

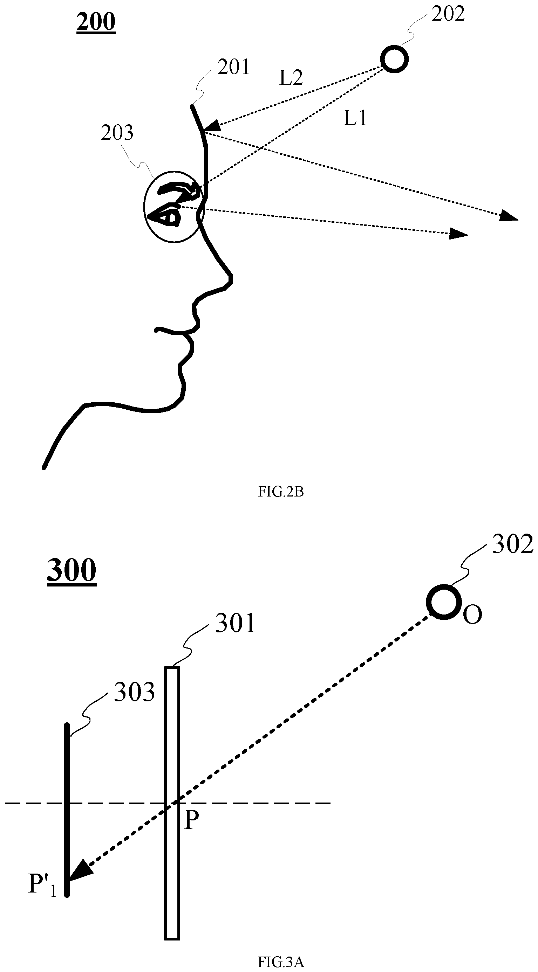

Fig. 2B shows a light schematic diagram after a virtual face model of an exemplary embodiment of the present disclosure wearing glasses. As shown in Fig. 2B, when the glasses 203 are worn, the first beam of light will pass through the glasses 203, and the reflected light of the first beam will also pass through the glasses. Comparing Fig. 2A and Fig. 2B, it can be seen that the optical paths before and after the glasses are worn are different under the same incident light condition, and it can be seen that after the glasses are worn, the light irradiating the virtual face model and the light being reflected from the virtual face model both need to pass through the glasses, and when the light passes through the glasses, it will be optically distorted due to the glasses, so the brightness parameter of the virtual face model obtained after the glasses are worn is disturbed by the glasses. Based on this, the brightness attenuation parameter corresponding to the glasses can be determined based on the change of the brightness parameter of the virtual face model before and after the virtual face model wearing glasses.

It can be seen that in the process of determining the image synthesis parameter, the method of the exemplary embodiment of the present disclosure can turn on the virtual light source, collect and acquire the brightness parameter of the virtual face model by using the virtual image acquisition device, and then compare the change of the brightness parameter of the virtual face model before and after the glasses are worn to determine the brightness attenuation parameters corresponding to the glasses. Therefore, the present disclosure can obtain the synthesis parameters for glasses-wearing images by only using the virtual face model data, and then synthesize a large number of glasses-wearing images with different glasses styles and wearing positions, thereby reducing data acquisition cost, and the synthesized glasses-wearing images have more realistic effects.

In some embodiments of the present disclosure, considering that an imaging position will change after the glasses are worn, exemplary embodiments of the present disclosure may further include: determining two-dimensional sampling positions and three-dimensional sampling positions located on the virtual face model matching the two-dimensional sampling positions when the virtual face model does not wear glasses, based on a relative position between a virtual image acquisition device and the virtual face model; obtaining the two-dimensional sampling positions when the glasses are worn by adjusting the two-dimensional sampling positions when the virtual face model does not wear glasses based on optical parameters of the glasses; determining an image distortion parameter having a matching relationship with the brightness attenuation parameter, based on the changes of two-dimensional sampling positions of the three-dimensional sampling positions located on the virtual face model before and after the glasses are worn. Here, the image synthesis parameter can also include an image distortion parameter, which can be used to adjust the imaging position before and after the glasses are worn.

In a practical application, before the glasses are worn, a virtual camera and a virtual face model can be positioned according to the relative position between a real equipment and the face, so as to determine the relative position between the virtual camera and the virtual face model, and the virtual face model can be equipped with virtual VR glasses. Then, based on the relative position relationship between the virtual camera and the virtual face model, a two-dimensional facial image of the virtual face model can be acquired. On this basis, a meshing partition can be performed on the two-dimensional facial image to obtain a large number of two-dimensional mesh points, that is, a plurality of two-dimensional sampling positions (i.e., two-dimensional imaging points).

According to the principle of optical imaging, each two-dimensional sampling position has a corresponding three-dimensional sampling position (that is, a three-dimensional spatial position), therefore, a straight line can be drawn along each two-dimensional sampling position in the two-dimensional facial image and the camera optical center, and a position where the straight line intersects with the virtual face model is the three-dimensional sampling position. Of course, camera internal parameters and camera external parameters of the virtual image acquisition device can also be used to calculate the three-dimensional sampling position corresponding to each two-dimensional sampling position in the two-dimensional facial image, so as to obtain a batch of three-dimensional sampling positions. It should be understood that if the virtual face model wears virtual VR glasses, the two-dimensional face image collected by the virtual image acquisition device may include both a face area and a virtual VR glasses area; if a two-dimensional sampling position is located in the face area in the two-dimensional face image, the three-dimensional sampling position may be located on the virtual face model, if the two-dimensional sampling position is located in the virtual VR glasses area in the two-dimensional face image, the three-dimensional sampling position may be locally located in the virtual VR glasses.

In both cases of wearing glasses and not wearing glasses, the same three-dimensional sampling position P may have different imaging positions in a physical imaging plane. Based on this, the three-dimensional sampling positions located in the virtual face model and the glasses model are input into the optical simulation system (the optical simulation system only simulates the refraction and brightness attenuation caused by the glasses, ignoring halo and light spots, etc. caused by some reflections on the inner and outer surfaces of the glasses). The change of the imaging position of the three-dimensional sampling position P in the two-dimensional facial image after the glasses are worn is simulated, the imaging position of the three-dimensional sampling position P in the two-dimensional facial image before the glasses are worn is recorded as P'₁, and the changed imaging position after the glasses are worn is recorded as P'₂, it can be concluded that the two-dimensional sampling position corresponding to the three-dimensional sampling position P when the glasses are not worn moves from P'₁ to P'₂ after being distorted by the glasses, and based on this, the image distortion parameter can be determined.

Moreover, in the exemplary embodiments of the present disclosure, three-dimensional spatial positions can be sampled as sampling positions, so that the brightness attenuation parameter and image distortion parameter for each pixel in the distorted image can be obtained according to the original pixel position corresponding to each pixel.

In some embodiments of the present disclosure, a brightness parameter of the virtual face model of the exemplary embodiments of the present disclosure may include a first imaging brightness parameter of a virtual light source acquired by a virtual image acquisition device located on the virtual face model. Here, the brightness attenuation parameter at least includes a first brightness attenuation coefficient, which is determined based on the first imaging brightness parameters before and after the glasses are worn, for example, the first brightness attenuation coefficient can be the difference between the first imaging brightness parameters before and after the glasses are worn, or the first brightness attenuation coefficient can also be determined based on the difference.

When the light emitted by the virtual light source irradiates the virtual face model, the light emitted by the virtual light source can be regarded as the light from the ambient light irradiating the virtual face model. The first imaging brightness parameter acquired by the virtual acquisition device can be regarded as the brightness of light irradiating the virtual face model. Based on this, the first brightness attenuation coefficient can reflect the brightness change of the light from the ambient light source irradiating the virtual face model before and after the glasses are worn.

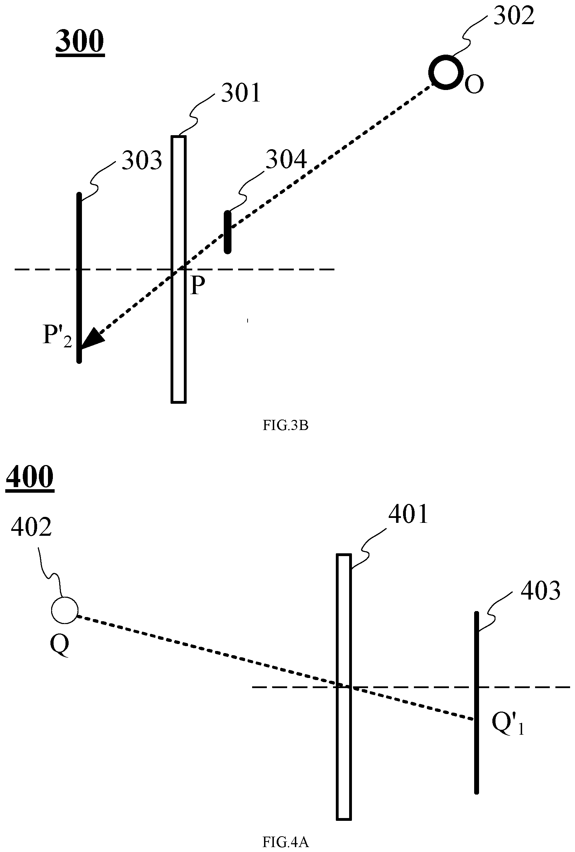

For acquiring the brightness parameter of the virtual face model by using the virtual image acquisition device with the assistance of the virtual light source, an exemplary embodiment of the present disclosure binds the virtual image acquisition device at the position of the virtual face model, and acquires the first imaging brightness parameter based on the virtual image acquisition device when the virtual face model is irradiated by the virtual light source. In order to facilitate the understanding of the acquisition process of the first imaging brightness parameter, the following description will be made with reference to the schematic diagram of the acquisition principle architecture of the first imaging brightness parameter before the glasses are worn as shown in Fig. 3A and the schematic diagram of the acquisition principle architecture of the first imaging brightness parameter after the glasses are worn as shown in Fig. 3B.

As shown in Fig. 3A, the acquisition principle architecture 300 of the exemplary embodiment of the present disclosure includes a virtual image acquisition device 301, a virtual light source 302 and a physical imaging plane 303, before the glasses are worn. The virtual image acquisition device 301 can be placed at a spatial point P (such as the corner of the eye) of the virtual face model shown in Fig. 3A. It should be understood that if the virtual face model is equipped with VR glasses, the virtual light source 302 can be an LED light source carried on the VR glasses. When the virtual light source 302 emits light to the point P, the light can be captured by the virtual image acquisition device 301 and form an imaging point P'₁ on the physical imaging plane 303. Here, the gray scale value of the pixel where the imaging point P'₁ is located is the first imaging brightness parameter before the glasses are worn.

As shown in Fig. 3B, the acquisition principle architecture 300 of the exemplary embodiment of the present disclosure includes a virtual image acquisition device 301, a virtual light source 302, glasses 304 and a physical imaging plane 303, when the glasses are worn. The virtual image acquisition device 301 can be placed at the spatial point P of the virtual face model shown in Fig. 3B. When the virtual light source 302 emits light to the point P, the light can be captured by the virtual image acquisition device 301 and form an imaging point P'₂ on the physical imaging plane 303. Here, the gray scale value of the pixel where the imaging point P'₂ is located is the first imaging brightness parameter after the glasses 304 are worn.

The brightness parameter of the virtual face model of the exemplary embodiments of the present disclosure may further include a second imaging brightness parameter of the virtual light source located in the virtual face model at the virtual image acquisition device. Here, the brightness attenuation parameter may also include a second brightness attenuation coefficient, which is determined based on the second imaging brightness parameters before and after the glasses are worn, for example, the second brightness attenuation coefficient can be the difference between the second imaging brightness parameters before and after the glasses are worn, or the second brightness attenuation coefficient can also be determined based on the difference.

When the virtual light source on the virtual face model emits light, the light emitted by the virtual light source can be regarded as the light reflected by the virtual face model. The second imaging brightness parameter acquired by the virtual acquisition device can be regarded as the brightness of light reflected by the virtual face model. Based on this, the second brightness attenuation coefficient can reflect the brightness change of the light reflected by the virtual face model in the environment before and after the glasses are worn.

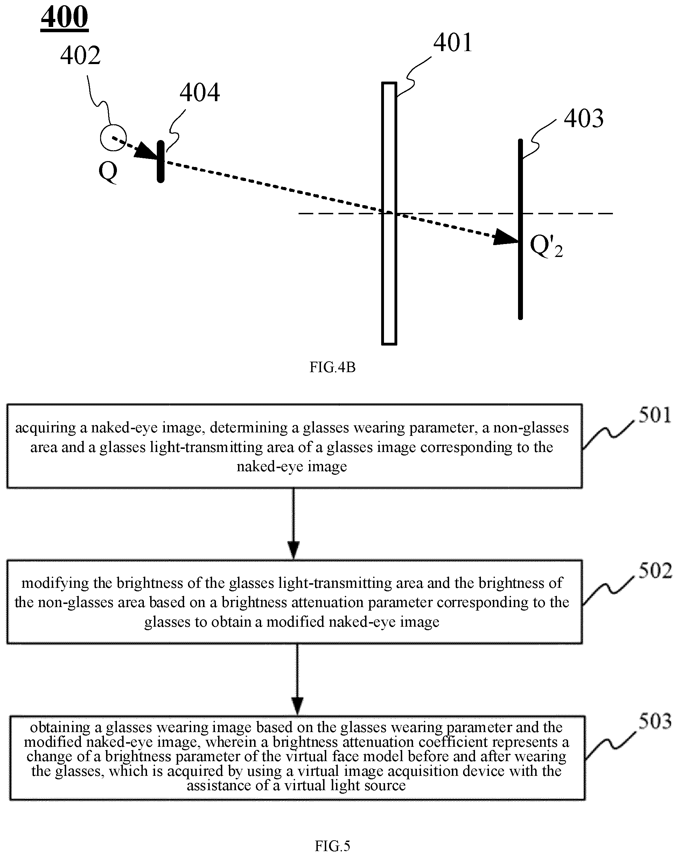

For acquiring the brightness parameter of the virtual face model by using the virtual image acquisition device with the assistance of the virtual light source, an exemplary embodiment of the present disclosure binds the virtual image acquisition device to the virtual face model, and acquires the second imaging brightness parameter based on the virtual image acquisition device when the virtual face model emits light to the environment. In order to facilitate the understanding of the acquisition process of the second imaging brightness parameter, the following description will be made with reference to the schematic diagram of the acquisition principle architecture of the second imaging brightness parameter before the glasses are worn as shown in Fig. 4A and the schematic diagram of the acquisition principle architecture of the second imaging brightness parameter after the glasses are worn as shown in Fig. 4B.

As shown in Fig. 4A, the acquisition principle architecture 400 of the exemplary embodiment of the present disclosure includes a virtual image acquisition device 401, a virtual light source 402 and a physical imaging plane 403 before the glasses are worn. The virtual light source 402 can be placed at a spatial point Q (such as the corner of the eye) of the virtual face model shown in Fig. 4A. When the virtual light source 402 emits light to the virtual image acquisition device 401, the light can be captured by the virtual image acquisition device 401 and form an imaging point Q'₁ on the physical imaging plane 403. Here, the gray scale value of the pixel where the imaging point Q'₁ is located is the second imaging brightness parameter before the glasses are worn. It should be understood that the relative position between the virtual face model and the virtual image acquisition device can be that shown with reference to Fig. 2A to ensure that the second imaging brightness parameter obtained at this time matches the image distortion parameter.

As shown in Fig. 4B, the acquisition principle architecture 400 of the exemplary embodiment of the present disclosure includes a virtual image acquisition device 401, a virtual light source 402, glasses 404 and a physical imaging plane 403 when the glasses are worn. The virtual light source 402 can be placed at the spatial point Q of the virtual face model shown in Fig. 4B, when the virtual light source 302 emits light to the image acquisition device 401, the light can be captured by the virtual image acquisition device 401 and form an imaging point Q'₂ on the physical imaging plane 403. Here, the gray scale value of the pixel where the imaging point Q'₂ is located is the second imaging brightness parameter after the glasses are worn. It should be understood that the relative position between the virtual face model and the virtual image acquisition device can be that shown with reference to Fig. 2B to ensure that the second imaging brightness parameter obtained at this time matches the image distortion parameter.

In some embodiments of the present disclosure, there is a matching relationship between the glasses wearing posture and the glasses texture according to the exemplary embodiment of the present disclosure, so as to ensure that in the process of image synthesis, a certain wearing mode or glasses style can be selected according to actual needs, and a glasses wearing image meeting the needs of users can be synthesized.

In a practical application, the wearing of glasses is not only limited to parameters of the light-transmitting area in the glasses, but also related to the wearing posture of the glasses and the texture of the glasses frame, and there is a matching relationship among the brightness attenuation parameter, the image distortion parameter, glasses wearing posture, and glasses type.

After the brightness parameters before and after the glasses are worn have been determined, the glasses wearing postures, and the brightness attenuation parameters, the image distortion parameters in different wearing postures can be acquired. Based on this, the wearing posture parameters can be bound with brightness attenuation parameters and image distortion parameters, so that images under different wearing postures can be obtained according to actual needs in the image synthesis stage. Moreover, for a group of glasses texture images, multiple groups of image distortion parameters (the relationship between the positions P and P' before and after glasses are added) and brightness attenuation coefficients can be generated randomly by using multiple face models, and such multiple groups of parameters can be stored in the glasses texture images, and any one group can be randomly selected during usage.

In a practical application, the above-mentioned glasses wearing parameter includes a glasses type which can be defined in the form of image texture information, the image texture information can include a glasses image that contains a glasses light-transmitting area and a glasses-free area. If the glasses type is rimmed glasses, it is necessary to exclude opaque areas at the edge of the glasses.

For example, an exemplary embodiment of the present disclosure can turn on LED and camera of VR equipment (such as VR glasses) in a pure dark environment, arrange the glasses and VR equipment according to their relative positions when the glasses and VR equipment are worn normally, and use the camera to capture a glasses image of pure glasses. Here, in order to obtain glasses images of various postures, the postures of arranging the glasses can be changed, and in order to obtain glasses images of various types of glasses, different types of glasses can be replaced.

When the glasses image is captured, the glasses-free area A appears as an area with pure black background or a VR device structure area, the glasses-free area A can be labelled on the glasses image by mask, and the glasses light-transmitting area B needs to consider whether the glasses belong to rimless glasses or rimmed glasses, for the rimmed glasses, it is necessary to exclude the opaque area on the side of the glasses edge, and at the same time, the glasses light-transmitting area B can be labelled on the glasses image by mask. On this basis, a set of glasses texture information can be formed based on the mask image of the glasses-free area A, the mask image of the glasses light-transmitting area B and the glasses image.

From the above, it can be seen that the image synthesis parameter that can be determined by the method provided by the exemplary embodiment of the present disclosure includes at least a brightness attenuation parameter, which may include a first brightness attenuation coefficient and further may include a second brightness attenuation coefficient. On this basis, in order to ensure that the synthesized image is more realistic, the image synthesis parameter can also include an image distortion parameter. Meanwhile, glasses type, wearing posture, etc. can also have mapping relationships with the brightness attenuation coefficient and image distortion parameter, which is convenient for users to choose and synthesize glasses wearing images with diverse wearing postures and textures.

An exemplary embodiment of the present disclosure also provides an image synthesis method, which can be executed by a terminal, or a chip applied to the terminal. Fig. 5 shows a flowchart of an image synthesis method of an exemplary embodiment of the present disclosure. As shown in Fig. 5, the image synthesis method of the exemplary embodiment of the present disclosure may include:
Step 501: acquiring a naked-eye image, determining a glasses wearing parameter, a non-glasses area and a glasses light-transmitting area of a glasses image corresponding to the naked-eye image.

For example, the naked-eye image can be acquired in response to a request of synthesizing a glasses-wearing image, the naked-eye image can be acquired through an image acquisition device in real time, or an existing naked-eye image can be uploaded. For example, when it needs to acquire a naked-eye image of a specified object, a VR acquisition device can be worn for the specified object, and an image acquisition device on the VR device can be utilized to acquire the naked-eye image of the specified object.

In some embodiments of the present disclosure, the terminal can, in response to the glasses style or even the wearing mode selected by the user in an image synthesis interface, determine the glasses wearing parameter to determine the effect of the final synthesized image. For example, the glasses wearing parameter may include glasses type or glasses wearing posture.

When the glasses wearing parameter includes the glasses type, the glasses type can be defined in the form of image texture information, which can include a mask image of the glasses-free area A, a mask image of the glasses light-transmitting area B and the glasses image. When glasses wearing parameter includes glasses type and glasses wearing posture, the glasses wearing posture can include normal wearing, oblique wearing and so on. It should be understood that considering that the glasses image and the naked eye image need to be synthesized into one image, the image sizes of such two images should be as equal as possible.

Step 502: modifying the brightness of the glasses light-transmitting area and the brightness of the non-glasses area based on a brightness attenuation parameter corresponding to the glasses to obtain a modified naked-eye image. The brightness attenuation parameter is the change of the imaging brightness parameter of the virtual face model before and after the glasses are worn, which is acquired by the virtual image acquisition device with the assistance of the virtual light source.

In order to ensure that the synthesized image is more realistic, the shading degree of the final synthesized image can be adjusted, so that the final synthesized image is in a scenario similar to natural light and/or illumination, and because the brightness attenuation parameter is the change of the imaging brightness parameter of the virtual face model before and after the glasses are worn, which is acquired by the virtual image acquisition device with the assistance of the virtual light source, the brightness of the glasses light-transmitting area and the brightness of the non-glasses area of the naked-eye image can be modified based on the brightness attenuation parameters corresponding to the glasses, the modified naked-eye image can be close to a natural light and/or illumination scenario, thus enhancing the realism of a subsequent synthesized image.

Step 503: obtaining a glasses wearing image based on the glasses wearing parameter and the modified naked-eye image, wherein a brightness attenuation coefficient represents a change of a brightness parameter of the virtual face model before and after wearing the glasses, which is acquired by using a virtual image acquisition device with the assistance of a virtual light source. Here, firstly, the glasses light-transmitting area and the non-glasses area can be obtained from the naked-eye image and then be subject to brightness adjustment, then the glasses light-transmitting area and the non-glasses area after brightness adjustment can be stitched again, and the glasses can be rendered on the stitched image to obtain the glasses wearing image. The following description takes the glasses wearing parameter including the glasses type as an example.

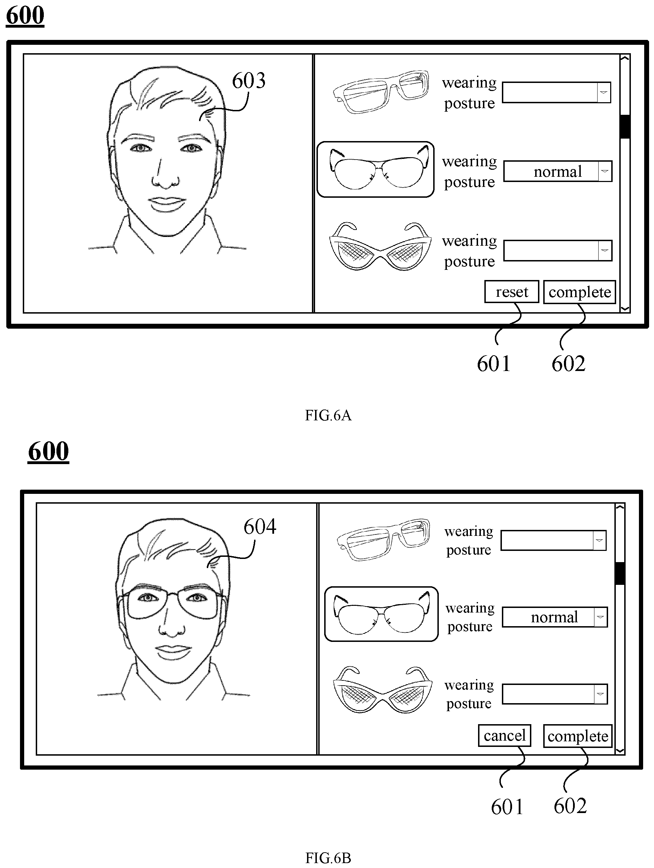

Fig. 6A shows a schematic diagram of a display interface before image synthesis of an exemplary embodiment of the present disclosure, and Fig. 6B shows a schematic diagram of a display interface after image synthesis of an exemplary embodiment of the present disclosure. As shown in Fig. 6A, in the display interface 600, the user can upload the naked-eye images 603 without glasses, then select the glasses need to wear and set the wearing posture, and then slide a slider of progress bar to select glasses. After having selected the glasses, the user can also select different wearing postures based on a wearing mode selection box. If the user thinks that the selected glasses do not meet the requirements, the user can reset the glasses through the reset control 601. if the user determines the selected glasses meets the requirements, the user can make confirmation through the completion control 602, and upon detection of the trigger operation on the completion control 602, the terminal can perform image synthesis based on the naked-eye image and the selected glasses wearing parameter, thereby obtaining the glasses wearing image 604 shown in Fig. 6B.

In some embodiments of the present disclosure, the brightness attenuation parameter of the exemplary embodiment of the present disclosure includes a first brightness attenuation coefficient, which represents the change of the imaging brightness parameter of the virtual face model irradiated by the virtual light source before and after the glasses are worn, which is acquired by the virtual image acquisition device. The first brightness attenuation coefficient can be actually regarded as the brightness change of the light irradiated by the ambient light source on the virtual face model before and after the glasses are worn. Based on this, modifying the brightness of the glasses light-transmitting area and the brightness of the non-glasses area of a glass image corresponding to the naked-eye image based on a brightness attenuation parameter corresponding to the glasses, including: modifying the brightness of the glasses light-transmitting area and the brightness of the non-glasses area based on the first brightness attenuation coefficient.

For example, for the non-glasses area, its two-dimensional sampling positions will not change because of wearing the glasses, so that the brightness of the glasses light-transmitting area and the brightness of the non-glasses area can be modified by directly using the first brightness attenuation coefficient.

As an example, for the non-glasses area, because the virtual image acquisition system does not capture an image through the lens during image acquisition, the image of the non-glasses area will not be distorted before and after the glasses are worn, so the non-glasses area can be cropped from the naked eye image during image synthesis. Because the imaging brightness of the non-glasses area is only influenced by the first brightness attenuation coefficient, the brightness attenuation parameter of the light source can be applied to each pixel in the non-glasses area to obtain the synthesized image of the non-glasses area.

The brightness attenuation parameter of the exemplary embodiment of the present disclosure may further include a second brightness attenuation coefficient, which represents the change of the imaging brightness parameter of the virtual face model before and after the glasses are worn acquired by the virtual image acquisition device. The second brightness attenuation coefficient can be regarded as the brightness change of the light reflected by the virtual face model in the environment before and after the glasses are worn. Based on this, modifying the brightness of the glasses light-transmitting area and the brightness of the non-glasses area of a glass image corresponding to the naked-eye image based on a brightness attenuation parameter corresponding to the glasses, including: modifying the brightness of the glasses light-transmitting area based on the second brightness attenuation coefficient. The essence of this modification process is to change the gray scale of the glasses light-transmitting area.

For example, for the glasses light-transmitting area, because the virtual image acquisition system acquires the images through the lens during image acquisition, the light intensity of light emitted by the light source will be attenuated twice. At this time, the first brightness attenuation coefficient and the second brightness attenuation coefficient can be used to adjust the gray scale of the glasses light-transmitting area, so as to determine a base map of the lens light-transmitting area for subsequent image synthesis.

In practical applications, because there are many halos and flares in the lens which are difficult to be accurately simulated by the simulation system, the image of the glasses light-transmitting area in the original image in the glasses image texture information will be cropped and superimposed on the base map of the glasses light-transmitting area. If the superimposed image exceeds the highest brightness value of the image, the brightness level of the superimposed image can be set as the highest brightness value of the image. For example, for images of class uint8, the maximum brightness is 255.

For the opaque area of glasses, there is no distortion or attenuation of light intensity, so the corresponding area of glasses frame can be directly cropped off and pasted on the synthesized image.

For the glasses area, besides the glasses frame, considering that the position of the imaging point may change after the glasses are worn, based on this, the method of the exemplary embodiment of the present disclosure may further include:
adjusting the position of the glasses light-transmitting area based on an image distortion parameter, to obtain a light transmission modified area, the image distortion parameters represents an image position change of the virtual face model before and after the glasses are worn, which is acquired by the virtual image acquisition device, and it is judged whether the size difference between the glass light-transmitting area and the light transmission modified area is equal to or smaller than a preset difference. The preset difference here can be set according to actual situations, for example, 2~3 pixels.

In practical applications, when the brightness of the glasses light-transmitting area is modified, the position of the glasses light-transmitting area can be adjusted by using the image distortion parameter, so as to ensure that the obtained glasses wearing image is more authentic.

When the size difference of the light transmission modified area is less than or equal to the preset difference, it means that the naked eye image is complete, that is, there is no vacancy, and thus the process can end directly. When the size difference of the light transmission modified area is greater than the preset difference, it means that there is a vacancy in the two-dimensional face image. For example, since the distortion of glasses may reduce the image of the corresponding area in the naked-eye image, resulting in the glasses light-transmitting area in the synthesized image being incomplete. Here, the incomplete synthesized glasses wearing image can be inpainted based on an image inpainting network model.

For example, when the incomplete glasses-wearing image is inpainted, the image inpainting network model can be used to repair the incomplete glasses-wearing image. For example, the image inpainting network model can be an inpainting network model, which is an end-to-end neural network and can output an output image with the same size as the input image. The neural network model includes an encoder and a decoder.

In a training stage, a large number of glasses-wearing images with glasses on different faces can be collected, and any position in the glasses-wearing images can be randomly erased, so as to generate a large number of images with erased positions, and then be input into the inpainting network model, the encoder obtains high-level image features based on the images with erased positions, and then the decoder is utilized to adjust the sizes of the high-level image features to image features with the same size as the input images, and then full connection is performed, so as to obtain and then train a glasses image vacancy filling model, the input of which are glasses images with vacancies, and the output is predicted inpainted images. On this basis, the loss is determined based on the predicted inpainted images and the complete glasses-wearing images, if the loss does not meet an iterative termination condition, a back propagation algorithm can be used to update model parameters of the inpainting network model, so as to obtain the inpainted glasses-wearing image.

The two-dimensional facial image after the glasses is worn that is synthesized by the image synthesis method of the exemplary embodiment of the present disclosure is very close to the glasses wearing facial image in real life, and can truly reflect the light path change and light intensity change brought by glasses lenses, especially for near-eye scenes. Therefore, the two-dimensional facial image with glasses wearing that can be synthesized based on the exemplary embodiment of the present disclosure can be directly used for training data synthesis for pupil distance estimation, line of sight estimation, eye expression driving, face reconstruction and the like. It only needs to shoot a batch of data with naked eyes and get the relevant data of glasses so as to synthesize facial images with different glasses wearing in different facial states. Moreover, the image synthesis method of the exemplary embodiment of the present disclosure can also generate pre-training data for face attribute classification (such as glasses classification, wearing state, makeup, etc.), because wearing glasses will cause certain changes in face attributes, the synthetic data can generally be used as the pre-training data for attribute classification. In addition, in some scenarios, the image synthesis method of the exemplary embodiment of the present disclosure can also realize a functionality of trying on virtual glasses.

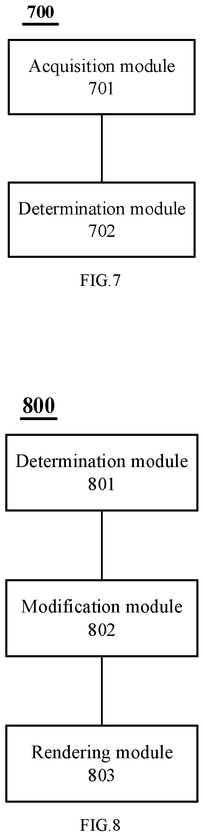

In a case of dividing each functional module according to corresponding functions, an exemplary embodiment of the present disclosure provides an image synthesis parameter determination apparatus, which may be a terminal, or a chip applied to the terminal. Fig. 7 shows a modular schematic block diagram of an image synthesis parameter determination apparatus of an exemplary embodiment of the present disclosure. As shown in Fig. 7, the image synthesis parameter determination apparatus 700 includes:
An acquisition module 701, configured to acquire a brightness parameter of a virtual face model by using a virtual image acquisition device with the assistance of a virtual light source;

A determination module 702, configured to determine a brightness attenuation parameter corresponding to glasses based on change of the brightness parameter of the virtual face model before and after the virtual face model wearing the glasses.

As a possible implementation, the brightness parameter of the virtual face model may include a first imaging brightness parameter of a virtual light source acquired by a virtual image acquisition device located on the virtual face model; the brightness attenuation parameter may at least include a first brightness attenuation coefficient, which can be determined based on the first imaging brightness parameters before and after the glasses are worn.

As a possible implementation, the acquisition module 701 is configured to bind the virtual image acquisition device at the position of the virtual face model, and acquire the first imaging brightness parameter based on the virtual image acquisition device when the virtual face model is irradiated by the virtual light source.

As a possible implementation, the brightness parameter of the virtual face model may further include a second imaging brightness parameter of the virtual light source located in the virtual face model at the virtual image acquisition device; the brightness attenuation parameter may also include a second brightness attenuation coefficient, which is determined based on the second imaging brightness parameters before and after the glasses are worn.

As a possible implementation, the acquisition module 701 is further configured to bind the virtual light source at the virtual face model, and acquire the first imaging brightness parameter based on the virtual image acquisition device.

As a possible implementation, the acquisition module 701 is further configured to determine two-dimensional sampling positions and three-dimensional sampling positions located on the virtual face model matching the two-dimensional sampling positions when the virtual face model does not wear glasses, based on a relative position between a virtual image acquisition device and the virtual face model; obtain the two-dimensional sampling positions when the glasses are worn by adjusting the two-dimensional sampling positions when the virtual face model does not wear glasses based on optical parameters of the glasses; determining an image distortion parameter having a matching relationship with the brightness attenuation parameter, based on the changes of two-dimensional sampling positions of the three-dimensional sampling positions located on the virtual face model before and after the glasses are worn.

As a possible implementation, there is a matching relationship among the brightness attenuation parameter, the image distortion parameter, the glasses wearing posture and the glasses type.

In a case of dividing each functional module according to corresponding functions, an exemplary embodiment of the present disclosure provides an image synthesis apparatus, which may be a terminal, or a chip applied to the terminal. Fig. 8 shows a modular schematic block diagram of an image synthesis apparatus of an exemplary embodiment of the present disclosure. As shown in Fig. 8, the image synthesis apparatus 800 includes:
A determination module 801, configured to acquire a glasses wearing parameter, a non-glasses area and a glasses light-transmitting area of a glasses image corresponding to the naked-eye image;
a modification module 802, configured to modify the brightness of the glasses light-transmitting area and the brightness of the non-glasses area based on a brightness attenuation parameter corresponding to the glasses to obtain a modified naked-eye image;
a rendering module 803, configured to obtain a glasses wearing image based on the glasses wearing parameter and the modified naked-eye image, wherein a brightness attenuation coefficient represents a change of a brightness parameter of the virtual face model before and after wearing the glasses, which is acquired by using a virtual image acquisition device with the assistance of a virtual light source.

As a possible implementation, the brightness attenuation parameter may include a first brightness attenuation coefficient, which represents the change of the imaging brightness parameter of the virtual face model irradiated by the virtual light source before and after the glasses are worn, that is acquired by the virtual image acquisition device, and the modification module 802 is configured to modify the brightness of the glasses light-transmitting area and the brightness of the non-glasses area based on the first brightness attenuation coefficient.

As a possible implementation, the brightness attenuation parameter may include a second brightness attenuation coefficient, which represents the change of the imaging brightness parameter of the virtual face model before and after the glasses are worn acquired by the virtual image acquisition device, and the modification module 802 is also configured to modify the brightness of the glasses light-transmitting area based on the second brightness attenuation coefficient.

As a possible implementation, the modification module 802 is further configured to adjust a position of the glasses light-transmitting area based on an image distortion parameter, to obtain a light transmission modified area, if the size difference between the glass light-transmitting area and the light transmission modified area is equal to or larger than a preset difference, perform image inpainting on the light transmission modified area based on the light transmission modified area, and the image distortion parameters represents an image position change of the virtual face model before and after the glasses are worn, which is acquired by the virtual image acquisition device.

As a possible implementation, the glasses wearing parameter includes glasses type and/or glasses wearing posture.

According to one or more technical solutions provided in the exemplary embodiments of the present disclosure, the brightness parameter of the virtual face model can be acquired by using a virtual image acquisition device with the assistance of a virtual light source, and the virtual face model is essentially a naked-eye virtual face image before the glasses are worn, and neither the light irradiated on the virtual face model nor the light reflected from the virtual face model passes through the glasses, therefore, the brightness parameter of the virtual face model acquired before the glasses are worn is not disturbed by the glasses. After the glasses are worn, each of the light irradiated on the virtual face model and the light reflected from the virtual face model needs to pass through the glasses, but the brightness parameter of the virtual face model acquired after the glasses are worn is disturbed by the glasses. Based on this, the brightness attenuation parameter corresponding to the glasses is determined based on the change of brightness parameters of the virtual face model before and after the glasses are worn.

It can be seen that in the process of determining the image synthesis parameters, the method of the exemplary embodiment of the present disclosure can turn on the virtual light source, acquire the brightness parameter of the virtual face model by using the virtual image acquisition device, and then determine the brightness attenuation parameter corresponding to the glasses based on the change of the brightness parameter of the virtual face model before and after the glasses are worn. Therefore, the present disclosure only needs to use the virtual face model data to obtain the synthesis parameters for the glasses-wearing images, and then synthesize a large number of glasses-wearing images with different glasses styles and wearing positions, thus reducing the data acquisition cost, and the synthesized glasses-wearing images have more real effects, especially for near-eye scenarios, the glasses-wearing images synthesized by the exemplary embodiments of the present disclosure can truly reflect the optical path changes and light intensity changes brought by the glasses lenses.

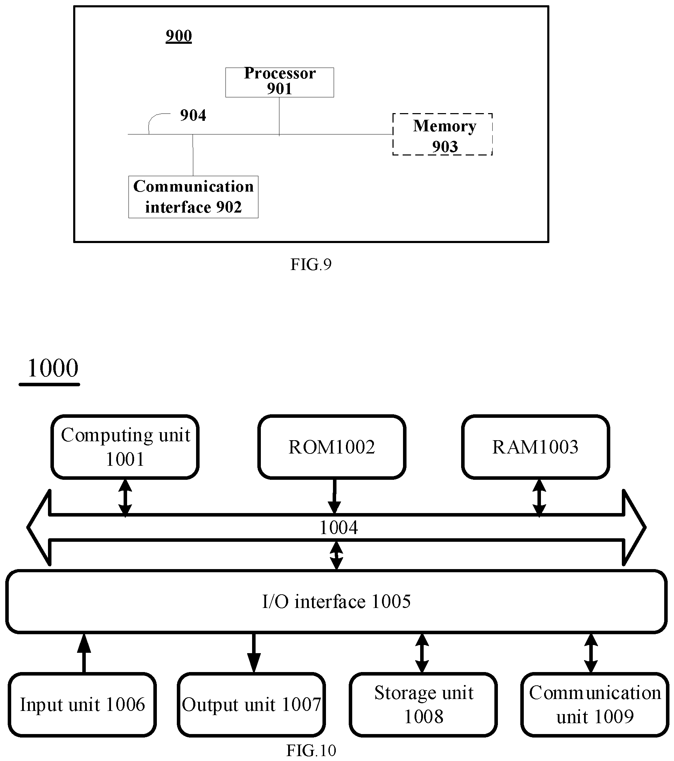

Fig. 9 shows a schematic block diagram of a chip of an exemplary embodiment of the present disclosure. As shown in Fig. 9, the chip 900 includes one or more processors 901 and a communication interface 902. The communication interface 902 can support the server to perform the data transceiving steps in the above method, and the processor 901 can support the server to perform the data processing steps in the above method.

Optionally, as shown in Fig. 9, the chip 900 further includes a memory 903, which may include a read-only memory and a random-access memory, and provides operating instructions and data to the processor. A part of the memory may also include a non-volatile random-access memory (NVRAM).

In some embodiments, as shown in Fig. 9, the processor 901 executes corresponding operations by calling operation instructions stored in the memory (which can be stored in the operating system). The processor 901 controls the processing operation of any one of the terminal devices, and the processor can also be called a central processing unit (CPU). The memory 903 may include a read only memory and a random-access memory, and provides instructions and data to the processor 901. A part of the memory 903 may also include NVRAM. For example, storage, communication interface and memory are coupled together through a bus system, wherein the bus system can include a power bus, a control bus and a status signal bus in addition to a data bus. However, for the sake of clarity, various buses are labeled as bus system 904 in Fig. 9.

The method disclosed in the embodiment of the present disclosure can be applied to or realized by a processor. The processor may be an integrated circuit chip with signal processing capability. In the process of implementation, the steps of the above method can be completed by hardware integrated logic circuits or software instructions in the processor. The processor can be a general processor, a digital signal processing (DSP), an ASIC, a field-programmable gate array (FPGA) or other programmable logic devices, discrete gate or transistor logic devices, and discrete hardware components. The method, steps and logic block diagram disclosed in embodiments of the present disclosure may be implemented or execute. The general processor can be a microprocessor, or the processor can be any conventional processor, etc. The steps of the method disclosed in combination with the embodiment of the present disclosure can be directly embodied as completion of execution by a hardware decoding processor, or completion of execution by a combination of hardware and software modules in the decoding processor. Software modules can be located in random access memory, flash memory, read-only memory, programmable read-only memory or electrically erasable programmable memory, registers and other mature storage media in this field. The storage medium is located in the memory, and the processor reads the information in the memory and combines its hardware to complete the steps of the above method.

An exemplary embodiment of the present disclosure also provides an electronic device, including at least one processor; and a memory communicatively connected with the at least one processor. The memory stores a computer program that can be executed by the at least one processor, and the computer program, when executed by the at least one processor, is used for causing the electronic device to perform the method according to embodiments of the present disclosure.

Exemplary embodiments of the present disclosure also provide a non-transitory computer-readable storage medium storing a computer program, wherein the computer program, when executed by a processor of a computer, is used to cause the computer to perform the method according to embodiments of the present disclosure.

Exemplary embodiments of the present disclosure also provide a computer program product, including a computer program, wherein the computer program, when executed by a processor of a computer, is used for causing the computer to perform the method according to embodiments of the present disclosure.

Referring to Fig. 10, a structural block diagram of an electronic device 1000 that can be a server or a client of the present disclosure will now be described, which is an example of a hardware device that can be applied to various aspects of the present disclosure. Electronic devices are intended to represent various forms of digital electronic computer devices, such as laptop computers, desktop computers, workstations, personal digital assistants, servers, blade servers, mainframe computers, and other suitable computers. Electronic devices can also represent various forms of mobile devices, such as personal digital processing, cellular phones, smart phones, wearable devices and other similar computing devices. The components shown herein, their connections and relationships, and their functions are only examples, and are not intended to limit the implementation of the present disclosure described and/or claimed herein.

As shown in Fig. 10, an electronic device 1000 includes a computing unit 1001, which can perform various appropriate actions and processes according to a computer program stored in a read-only memory (ROM)1002 or a computer program loaded from a storage unit 1008 into a random-access memory (RAM)1003. In the RAM 1003, various programs and data required for the operation of the device 1000 can also be stored. A computing unit 1001, a ROM 1002 and a RAM 1003 are connected to each other through a bus 1004. An input/output (I/O) interface 1005 is also connected to the bus 1004.

A plurality of components in the electronic device 1000 are connected to the I/O interface 1005, including an input unit 1006, an output unit 1007, a storage unit 1008 and a communication unit 1009. The input unit 1006 may be any type of device capable of inputting information to the electronic device 1000, and the input unit 1006 may receive input numeric or character information and generate key signal input related to user settings and/or function control of the electronic device. The output unit 1007 may be any type of device capable of presenting information, and may include but not limited to a display, a speaker, a video/audio output terminal, a vibrator and/or a printer. The storage unit 1004 may include, but is not limited to, a magnetic disk and an optical disk. The communication unit 1009 allows the electronic device 1000 to exchange information/data with other devices through a computer network such as the Internet and/or various telecommunication networks, and may include but not limited to a modem, a network card, an infrared communication device, a wireless communication transceiver and/or a chipset, such as a Bluetooth^{™} device, a WiFi device, a WiMax device, a cellular communication device and/or the like.

As shown in Fig. 10, the computing unit 1001 can be various general and/or special processing components with processing and computing capabilities. Some examples of the computing unit 1001 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 1001 performs the various methods and processes described above. For example, in some embodiments, the methods of the exemplary embodiments of the present disclosure may be implemented as a computer software program tangibly embodied in a machine-readable medium, such as the storage unit 1008. In some embodiments, a part or all of the computer program may be loaded and/or installed on the electronic device 1000 via the ROM 1002 and/or the communication unit 1009. In some embodiments, the computing unit 1001 may be configured to perform a method by any other suitable means (for example, by means of firmware).

The program codes for implementing the methods of the present disclosure can be written in any combination of one or more programming languages. These program codes may be provided to a processor or controller of a general-purpose computer, a special-purpose computer or other programmable data processing apparatus, so that the program codes, when executed by the processor or controller, cause the functions/operations specified in the flowcharts and/or block diagrams to be implemented. The program codes can be completely executed on a machine, partially executed on a machine, partially executed on a machine and partially executed on a remote machine or completely executed on a remote machine or server as a separate software package.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

As used in this disclosure, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including machine-readable media that receive machine instructions as machine-readable signals. The term "machine-readable signal" refers to any signal used to provide machine instructions and/or data to a programmable processor.

In order to provide interaction with users, the systems and techniques described herein can be implemented on a computer having a display device (for example, a CRT (cathode ray tube) or an LCD (liquid crystal display) monitor) for displaying information to users; and a keyboard and a pointing device (for example, a mouse or a trackball) through which a user can provide input to the computer. Other kinds of devices can also be used to provide interaction with users; for example, the feedback provided to the user can be any form of sensory feedback (for example, visual feedback, auditory feedback, or tactile feedback); and the input from the user can be received in any form, including acoustic input, voice input or tactile input.

The systems and techniques described herein may be implemented in or include a computing system that includes a back-end component (e.g., as a data server), a computing system that includes a middleware component (e.g., an application server), or a computing system that includes a front-end component (e.g., a user computer with a graphical user interface or a web browser through which a user can interact with embodiments of the systems and techniques described herein). Components of the system can be interconnected by any form or medium of digital data communication (for example, communication network). Examples of communication networks include local area network (LAN), wide area network (WAN) and Internet.

A computer system may include a client and a server. The client and server are generally far away from each other and usually interact with each other through a communication network. The relationship between client and server is generated by computer programs running on corresponding computers and having a client-server relationship with each other.

In the above embodiments, it can be realized in whole or in part by software, hardware, firmware or any combination thereof. When implemented in software, it can be fully or partially implemented in the form of a computer program product. The computer program product includes one or more computer programs or instructions. When the computer program or instruction is loaded and executed on a computer, the process or function described in the embodiments of the present disclosure can be fully or partially executed. The computer can be a general-purpose computer, a special-purpose computer, a computer network, a terminal, user equipment or other programmable devices. The computer program or instructions can be stored in a computer-readable storage medium or transmitted from one computer-readable storage medium to another. For example, the computer program or instructions can be transmitted from one website, computer, server or data center to another website, computer, server or data center by wired or wireless means. The computer-readable storage medium can be any available medium that a computer can access or a data storage device such as a server or a data center that integrates one or more available media. The available media can be magnetic media, such as floppy disk, hard disk, magnetic tape; it can also be an optical medium, such as a digital video disc (DVD); it can also be a semiconductor medium, for example, a solid-state drive (SSD).

Although the present disclosure has been described in connection with specific features and embodiments thereof, it is obvious that various modifications and combinations can be made without departing from the spirit and scope of the present disclosure. Accordingly, the specification and drawings are merely illustrative of the present disclosure as defined by the appended claims, and are regarded as covering any and all modifications, variations, combinations or equivalents within the scope of the present disclosure. Obviously, those skilled in the art can make various modifications and variations to the present disclosure without departing from its spirit and scope. Thus, if these modifications and variations of the present disclosure are within the scope of the claims of the present disclosure and their equivalents, the present disclosure is also intended to include these modifications and variations.

## Claims

1. A method of determining an image synthesis parameter, comprising:
acquiring a brightness parameter of a virtual face model by using a virtual image acquisition device with the assistance of a virtual light source;
determining a brightness attenuation parameter corresponding to glasses based on a change of the brightness parameter of the virtual face model before and after wearing the glasses.

2. The method of claim 1, wherein, the brightness parameter of the virtual face model includes a first imaging brightness parameter of the virtual light source acquired by a virtual image acquisition device located on the virtual face model; the brightness attenuation parameter at least includes a first brightness attenuation coefficient, which is determined based on the first imaging brightness parameters before and after the glasses are worn.

3. The method of claim 2, wherein, the acquiring a brightness parameter of a virtual face model by using a virtual image acquisition device with the assistance of a virtual light source, comprises:
binding the virtual image acquisition device at the position of the virtual face model, and
acquiring the first imaging brightness parameter based on the virtual image acquisition device when the virtual face model is irradiated by the virtual light source.

4. The method of claim 2, wherein, the brightness parameter of the virtual face model includes a second imaging brightness parameter of the virtual light source located in the virtual face model at the virtual image acquisition device; the brightness attenuation parameter further includes a second brightness attenuation coefficient, which is determined based on the second imaging brightness parameters before and after the glasses are worn.

5. The method of claim 4, wherein, the acquiring a brightness parameter of a virtual face model by using a virtual image acquisition device with the assistance of a virtual light source, comprises:
binding the virtual light source at the virtual face model, and
acquiring the first imaging brightness parameter of the virtual light source based on the virtual image acquisition device.

6. The method of any one of claims 1-5, wherein, the method further comprises:
determining two-dimensional sampling positions and three-dimensional sampling positions located on the virtual face model matching the two-dimensional sampling positions when the virtual face model does not wear glasses, based on a relative position between the virtual image acquisition device and the virtual face model;
obtaining the two-dimensional sampling positions when the glasses are worn by adjusting the two-dimensional sampling positions when the virtual face model does not wear glasses based on optical parameters of the glasses;
determining an image distortion parameter having a matching relationship with the brightness attenuation parameter, based on changes of two-dimensional sampling positions of the three-dimensional sampling positions located on the virtual face model before and after the glasses are worn.

7. The method of claim 6, wherein, there is a matching relationship among the brightness attenuation parameter, the image distortion parameter, the glasses wearing posture and the glasses type.

8. An image synthesis method, comprising:
acquiring a naked-eye image, determining a glasses wearing parameter, a non-glasses area and a glasses light-transmitting area of a glasses image corresponding to the naked-eye image;
modifying the brightness of the glasses light-transmitting area and the brightness of the non-glasses area based on a brightness attenuation parameter corresponding to the glasses to obtain a modified naked-eye image;
obtaining a glasses wearing image based on the glasses wearing parameter and the modified naked-eye image, wherein the brightness attenuation coefficient represents a change of an imaging brightness parameter of a virtual face model before and after wearing the glasses, which is acquired by using a virtual image acquisition device with the assistance of a virtual light source.

9. The method of claim 8, wherein, the brightness attenuation parameter includes a first brightness attenuation coefficient, which represents the change of the imaging brightness parameter of the virtual face model irradiated by the virtual light source before and after the glasses are worn, that is acquired by the virtual image acquisition device, and
the modifying the brightness of the glasses light-transmitting area and the brightness of the non-glasses area based on a brightness attenuation parameter corresponding to the glasses, comprises:
modifying the brightness of the glasses light-transmitting area and the brightness of the non-glasses area based on the first brightness attenuation coefficient.

10. The method of claim 9, wherein, the brightness attenuation parameter further includes a second brightness attenuation coefficient, which represents the change of the imaging brightness parameter of the virtual face model before and after the glasses are worn acquired by the virtual image acquisition device, and
the modifying the brightness of the glasses light-transmitting area and the brightness of the non-glasses area based on a brightness attenuation parameter corresponding to the glasses, comprises:
modifying the brightness of the glasses light-transmitting area based on the second brightness attenuation coefficient.

11. The method of claim 8, wherein, the method further comprises:
adjusting a position of the glasses light-transmitting area based on an image distortion parameter, to obtain a light transmission modified area, wherein the image distortion parameter represents an image position change of the virtual face model before and after the glasses are worn, which is acquired by the virtual image acquisition device,
if the size difference between the glass light-transmitting area and the light transmission modified area is equal to or larger than a preset difference, perform image inpainting on the light transmission modified area based on the light transmission modified area.

12. The method of any one of claims 9-11, wherein, the glasses wearing parameter includes glasses type and/or glasses wearing posture.

13. An apparatus for determining an image synthesis parameter, comprising:
an acquisition module, configured to acquire a brightness parameter of a virtual face model by using a virtual image acquisition device with the assistance of a virtual light source;
a determination module, configured to determine a brightness attenuation parameter corresponding to glasses based on a change of the brightness parameter of the virtual face model before and after wearing the glasses.

14. An image synthesizing apparatus comprising:
a determination module, configured to acquire a naked-eye image, determining a glasses wearing parameter, a non-glasses area and a glasses light-transmitting area of a glasses image corresponding to the naked-eye image;
a modification module, configured to modify the brightness of the glasses light-transmitting area and the brightness of the non-glasses area based on a brightness attenuation parameter corresponding to the glasses to obtain a modified naked-eye image;
a rendering module, configured to obtain a glasses wearing image based on the glasses wearing parameter and the modified naked-eye image, wherein the brightness attenuation coefficient represents a change of an imaging brightness parameter of a virtual face model before and after wearing the glasses, which is acquired by using a virtual image acquisition device with the assistance of a virtual light source.

15. An electronic device, comprising:
a processor; and,
a memory for storing a program;
wherein the program comprises instructions which, when executed by the processor, cause the processor to perform the method of any one of claims 1-12.

16. A non-transitory computer-readable storage medium storing computer instructions, wherein the computer instructions are used to cause the computer to perform the method of any one of claims 1-12.

17. A computer program product comprising computer programs/instructions which, when executed by a processor, implement the method of any one of claims 1-12.

18. A computer program comprising program codes for execution by a processor for implementing the method of any one of claims 1-12.
